# EUROPEAN PATENT SPECIFICATION

(11) **EP 4 365 538 B1**
(45) Date of publication and mention of the grant of the patent: **18.02.2026**
(21) Application number: 21947404.6
(22) Date of filing: 28.06.2021
(51) Int. Cl.: G01B 11/00, G01C 3/00, G01S 17/08, B25J 9/16, B25J 13/08, B25J 19/02, G01S 17/06, G01S 17/42, G01S 17/48

(54) **MEASUREMENT AND POSITIONING SYSTEM BASED ON MACHINE VISION AND LASER TRIANGULATION**
MESS- UND POSITIONIERUNGSSYSTEM AUF BASIS VON MASCHINENSICHT UND LASERTRIANGULATION
SYSTÈME DE MESURE ET DE POSITIONNEMENT BASÉ SUR LA VISION ARTIFICIELLE ET LA TRIANGULATION LASER

(43) Date of publication of application: 08.05.2024
(73) Proprietor: Elementary Optomation Co., Ltd, Suzhou, Jiangsu 215000 (CN)
(72) Inventor: GOH, Yiu Jin, Jiangsu 215000 (CN); FANG, Zhongping, Beijing 100020 (CN)
(74) Representative: Lewis Silkin LLP
(86) International application number: PCT/CN2021/102781
(87) International publication number: WO 2023/272440

(56) References cited:
- CN-A- 1 616 920
- CN-A- 111 521 165
- CN-U- 203 405 574
- CN-U- 206 724 901
- CN-U- 206 724 901
- DE-A1- 102004 026 090
- US-B1- 6 314 631

## Description

### TECHNICAL FIELD

The present application relates to the fields of machine vision measurement and three-dimensional space positioning, and in particular to a three-dimensional measurement and positioning system based on machine vision and laser triangulation.

### BACKGROUND

For a robot, a recognition and tracking of an object is realized through machine vision, thereby a spatial coordinate position of a work object corresponding to the robot can be determined, and thus various tasks such as grabbing, placement or processing can be carried out. Currently, the method of robot visual positioning mainly includes a stereo vision method, a structured light method and a laser scanning method. The stereo vision method imitates the distance estimation and three-dimensional reconstruction of the human visual system for three-dimensional space measurement. The measurement accuracy depends on the measurement baseline length. The stereo vision method is bulky and not suitable for installation on a robot arm. The structured light measurement method is a three-dimensional measurement technology composed of a controllable light source and a camera. By projecting a light source with a specific structural pattern onto a surface of an object to be measured to produce light stripes, three-dimensional information on the surface of the object is obtained based on the pattern deformation of the light stripes on the surface of the object captured by the camera. The structured light measurement method is mainly suitable for obtaining the positions of various structural objects on the surface of objects. The laser triangulation sensor is a precision measurement sensor, but this one-dimensional measurement system can only measure the height or distance of a point. The laser flying point measurement method is also a one-dimensional measurement system that measures a straight-line distance by measuring the laser flight time, but the measurement accuracy is low.

CN206724901U discloses a monocular three-dimensional real-time online tracking and positioning system. This system directly acquires distance (Z-axis) through a laser rangefinder, with the CCD providing only two-dimensional image positioning (XY-axis) and no trigonometric geometric relationship. The target in CN206724901U is only a black and white circular target with a single function of providing image comparison. CN111521165A is directed to an intelligent system for tunnel construction risk prediction involving an enclosed monitoring system composed of arch top monitoring equipment and arch waist monitoring equipment. The design of the marking circle therein includes a multi-layer structure of the inner circle and the annular circle. US6314631B1 has mentioned a method for controlling an assembly process is provided in which at least one first robot holds a first part in relation to a second part. Targets are provided on at least one of the robots or the first or second part. A TV camera then determines the position of the targets. From this determination, the assembly process is controlled.

### SUMMARY

The technology of the present application is directed to a three-dimensional measurement and positioning system based on machine vision and laser triangulation, which can achieve a rapid measurement and a precise positioning for a three-dimensional coordinate position of an object point.

Technical solutions adopted by the present application to solve its technical problems include that: a measurement and positioning system based on machine vision and laser triangulation, which includes a machine vision system, a laser ranging system and a standard positioning target configured to be installed on a positioned workpiece.

The laser ranging system is configured to project laser light onto the standard positioning target.

The machine vision system is configured to capture and image a positioning target and a laser image projected on the standard positioning target.

The standard positioning target is a two-dimensional or three-dimensional structure having a center graphic, and the standard positioning target is provided with a plurality of solid figures distributed around the center graphic.

The plurality of solid figures are truncated cones and are distributed around the center graphic of the standard positioning target in a circularly symmetrical manner.

Further, the machine vision system includes a detection camera and a first optical imaging lens connected to the detection camera. The first optical imaging lens is provided with an adjustable aperture, and the bottom of the detection camera is also provided with an illumination system.

Further, the laser ranging system includes a laser projection component and a laser imaging component. The laser projection component is composed of a laser, a laser collimating lens and a beam splitter. The laser imaging component is composed of a second imaging lens and an imaging camera.

The beam splitter is disposed obliquely at 90 degrees below the detection camera, the laser is disposed at one side of the beam splitter, and the laser collimating lens is disposed between the laser and the beam splitter.

The imaging camera is disposed at one side of the detection camera, and the imaging camera is disposed at an angle to an optical axis directed to a surface of the standard positioning target.

Laser beam from the laser, via a laser collimator and a reflector, is deflected by 90 degrees and then is vertically directed to the surface of the standard positioning target. Scattered light of the laser beam is imaged by the laser imaging component.

Further, the standard positioning target is a two-dimensional or three-dimensional structure having a center graphic.

Further, at least three standard positioning targets are provided, and three of the at least three standard positioning targets are configured to be installed on the positioned workpiece at three positions that are not in a straight line.

Further, the laser ranging system includes a laser and a laser collimating lens disposed at a front end of the laser. The laser is disposed at one side of the detection camera, and the imaging camera is disposed an angle to an optical axis directed to the surface of the standard positioning target.

The laser light emitted by the laser, via the laser collimating lens, is tilted towards the standard positioning target and is imaged by the machine vision system.

Further, the laser ranging system includes a laser projection component and a laser imaging component. The laser projection component includes a laser and a laser collimating lens disposed at a front end of the laser. The laser imaging component is composed of a second imaging lens and an imaging camera.

The laser and the imaging camera are respectively disposed at two sides of the detection camera, and the imaging camera and the laser are respectively disposed at an angle to the optical axis directed towards the surface of the standard positioning target.

The laser beam from the laser, via the laser collimating mirror and the reflector, is deflected by 90 degrees and then vertically directed to the surface of the standard positioning target. The scattered light of the laser beam is imaged by the laser imaging component.

Beneficial effects of the present application include that a rapid measurement and a precise positioning of an object point coordinate position can be achieved by means of the standard positioning target in the design structure.

### DESCRIPTION OF DRAWINGS

FIG. 1 is a schematic diagram of a first positioning system based on machine vision and laser triangulation.
FIG. 2 is a schematic diagram of a standard positioning target where laser light is projected on the standard positioning target.
FIG. 3 is a schematic diagram of a three-dimensional standard positioning target.
FIG. 4 is a schematic diagram of the standard positioning target installed on a positioning object to be measured.
FIG. 5 is a schematic diagram of a second positioning system based on machine vision and laser triangulation.
FIG. 6 is a schematic diagram of positioning geometry relation of the laser triangulation in the second positioning system.
FIG. 7 is a schematic diagram for a laser beam and a target center, where a spacing between the laser beam and the target center is used for height measurement.
FIG. 8 is a schematic diagram of a third positioning system based on machine vision and laser triangulation.

Symbols in the figures are listed as follows:
Machine vision system 100, detection camera 101, adjustable aperture 102, first optical imaging lens 103, lighting system 104;
Standard positioning target 200, center graphic 201;
Laser ranging system 300, laser 301, laser collimating lens 302, beam splitter 303, second imaging lens 304, imaging camera 305, imaging straight line 306;
Three-dimensional standard positioning target 400, three-dimensional truncated cone 401;
Positioned workpiece 501.

### DETAILED DESCRIPTION OF EMBODIMENTS

In order to make the above objectives, features and advantages of the present application more comprehensible and much clearer, specific implementations of the present application will be described in detail below with reference to the accompanying drawings. In the following description, various specific details are set forth in order to provide a thorough understanding of the present application. However, the present application may be implemented in some other ways different from those described here. Persons skilled in the art may make similar improvements without departing from the connotation of the present application. Therefore, the present application is not limited to the specific embodiments disclosed below.

Unless otherwise defined, all technical and scientific terms used herein have the same meanings as commonly understood by those skilled in the technical field related in the present application. The terminology used herein in the description of the present application is used only for the purpose of describing specific embodiments and is not intended to limit the present application. As used herein, the term "and/or" includes any and all combinations of one or more of the associated listed items.

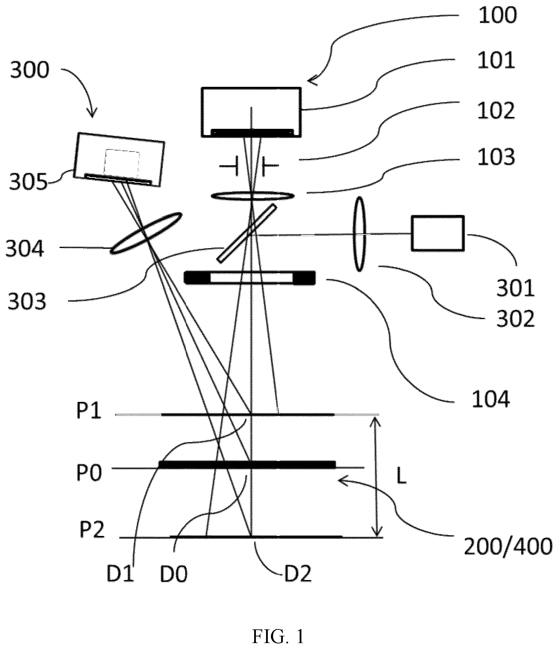

As shown in FIG. 1, the present application discloses a measurement and positioning system based on machine vision and laser triangulation, including a machine vision system 100, a laser ranging system 300 and a standard positioning target 200 configured to be installed on a positioned workpiece 501.

The laser ranging system 300 is configured to project laser light onto the standard positioning target 200.

The machine vision system 100 is configured to capture and image a positioning target and a laser image projected on the standard positioning target 200.

In working, a center positioning is achieved through the standard positioning target 200, and the XY axis coordinates are positioned through the machine vision system 100, thus the XY axis position is determined by the machine vision system 100. A positioning of vertical coordinate position Z is achieved through the laser ranging system 300 by projecting laser light on the standard positioning target 200. Particularly, the following embodiments are provided.

As shown in FIG. 1, the machine vision system 100 includes a detection camera 101 and a first optical imaging lens 103 connected to the detection camera 101. The first optical imaging lens 103 is provided with an adjustable aperture 102, and an illumination system 104 is also provided at the bottom of the detection camera 101.

The laser ranging system 300 includes a laser projection component and a laser imaging component. The laser projection component is composed of a laser 301, a laser collimating lens 302 and a beam splitter 303. The laser imaging component is composed of a second imaging lens 304 and imaging camera 305.

The beam splitter 303 is disposed obliquely at 90 degrees below the detection camera 101, the laser 301 is disposed at one side of the beam splitter 303, and the laser collimating lens 302 is disposed between the laser 301 and the beam splitter 303.

The imaging camera 305 is disposed at one side of the detection camera 101, and the imaging camera 305 is disposed at an angle to an optical axis directed to a surface of the standard positioning target 200.

Laser beam from the laser 301, via a laser collimator and a reflector, is deflected by 90 degrees and then vertically directed to the surface of the standard positioning target 200. Scattered light of the laser beam is imaged by the laser imaging component.

When performing the measurement and positioning, the machine vision system 100 and the laser ranging system 300 may be integrated and installed on a robot arm.

The standard positioning target 200 is pre-installed on a workpiece 501 that needs to be positioned. After the standard positioning target 200 installed on the object is illuminated by the lighting system 104, the standard positioning target 200 is imaged on a photoelectric sensor of the detection camera 101 by the first optical imaging lens 103. During use, the adjustable aperture 102 may be adjusted by matching with the brightness of the system lighting to ensure that the machine vision imaging system has sufficient brightness and depth of field.

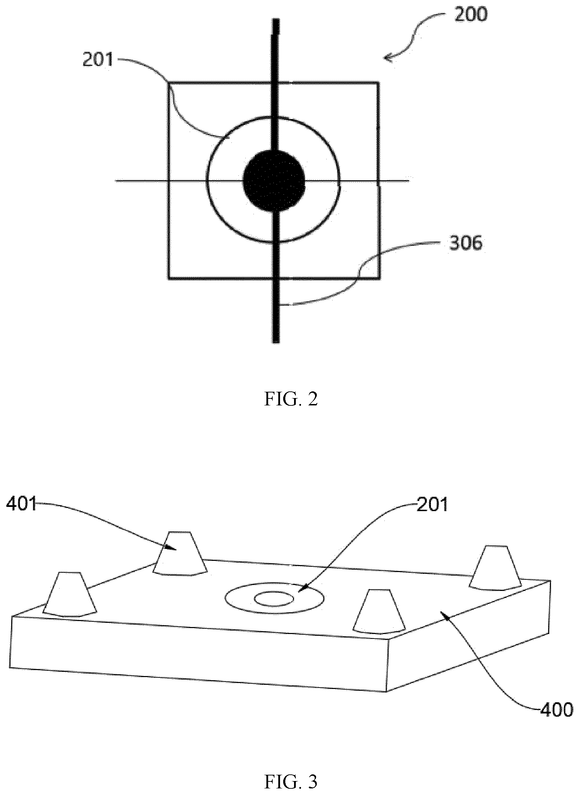

Particularly, the standard positioning target 200 is a two-dimensional or three-dimensional structure having a center graphic 201. In FIG. 2, a two-dimensional planar standard positioning target 200 is shown, and the images on the standard positioning target are two concentric circles. When the standard positioning target 200 is imaged at the center of the detection camera 101, the plane coordinate positions X and Y of the standard positioning target 200 corresponding to the robot arm can be accurately calculated and determined. The laser beam from the laser is projected on near the center of the standard positioning target 200, and the projected graphic may be a straight line 306 or a point.

The height of the robot arm corresponding to the work object is realized using the laser ranging system 300. The laser beam from the laser 301, via the laser collimator or cylindrical mirror, and then via the semi-transparent and semi-reflective beam splitter 303, is reflected, where the reflected light is deflected by 90 degrees and then vertically directed to the surface of the standard positioning target 200. The surface of the standard positioning target 200 is an optically rough surface, the scattered light of the laser beam is imaged on the imaging camera 305 by the second imaging lens 304. When the height of the standard positioning target 200 is at the middle position P0, a laser spot is also at the middle position of the imaging camera 305. The standard positioning target 200 has the highest position P1 and the lowest position P2, and a height L between P1 and P2 is a measurement and positioning range of the positioning system. No matter whether the standard positioning target 200 is raised or lowered, the laser beam is always projected at the same position. However, since an angle is formed between the optical axis of the imaging camera 305 and the optical axis of the laser beam, the position of the laser beam on the camera 305 changes in a nonlinear relation. Before use, a test calibration is performed to obtain the nonlinear relation, so that the calibrated nonlinear function relation can be applied to a height measurement of the standard positioning target 200, that is, the positioning of the vertical coordinate position Z.

On the basis of the foregoing, the standard positioning target 200 is a two-dimensional or three-dimensional structure having a center graphic 201. The standard positioning target 200 is surrounded by a plurality of solid figures. The center image may be a concentric circle, a concentric square, a concentric triangle, etc.

It should be noted that when using this two-dimensional standard positioning target 200 for measurement and positioning, the perpendicularity between the machine vision system 100 and the standard positioning target 200 may not be determined, and measurement positioning errors may occur. As shown in FIG. 3, a three-dimensional standard positioning target 400 is shown. The center of the standard positioning target 200 is a two-dimensional concentric circle, and four corners of this standard positioning target are four three-dimensional truncated cones 401. When an image of the three-dimensional standard positioning target 200 is asymmetrical due to the eccentricity and verticality errors occurred between the machine vision system 100 and the standard positioning target 200, the errors on eccentricity and angle may be processed and calculated through the image of the standard positioning target 200. In case that the optical axis of the machine vision system 100 passes through the center of the concentric circles and is perpendicular to the surface of the standard positioning target 200, then the image of the large three-dimensional standard positioning target 400 obtained by the machine vision is symmetrical, and only in this case an accurate spatial point position can be obtained, thus, the accuracy of measurement and positioning is ensured.

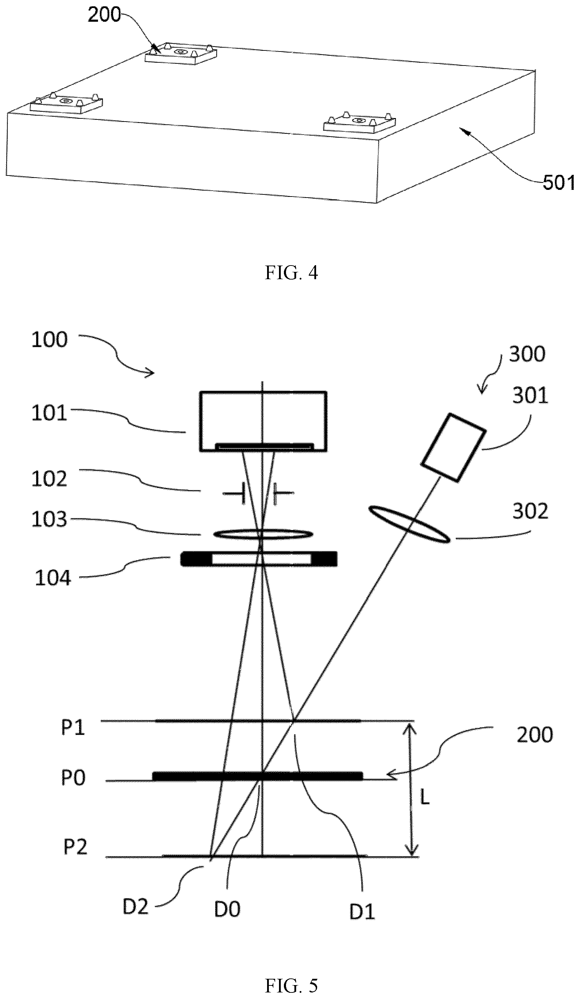

On the basis of the foregoing, at least three standard positioning targets 200 are provided, and three of the at least three standard positioning targets 200 are configured to be installed on the positioned workpiece 501 at three positions that are not in a straight line, because for an object, it is not sufficient to determine the spatial object position of this object when only the three-dimensional coordinate position of one point is measured. To determine the spatial position of a known object, at least three points that are not in a straight line need to be measured. As shown in FIG. 4, three standard positioning targets 200 are installed at three different places on the positioned workpiece 501, and three positioning measurements are performed to obtain the spatial position through three spatial points. As shown in FIG. 5, the machine vision system 100 includes a detection camera 101 and a first optical imaging lens 103 connected to the detection camera 101. The first optical imaging lens 103 is provided with an adjustable aperture 102, and an illumination system 104 is also provided at the bottom of the detection camera 101. The machine vision system 100 and the laser ranging system 300 may be integrated and installed on a robot arm.

The laser ranging system 300 includes a laser 301 and a laser collimating lens 302 disposed at the front end of the laser 301. The laser 301 is disposed at one side of the detection camera 101, and the imaging camera 305 is disposed at an angle to an optical axis directed towards a surface of the standard positioning target 200.

Laser light emitted from the laser 301, via the laser collimating lens 302, is tilted towards the standard positioning target and is imaged by the machine vision system 100. The machine vision system 100 performs the dual function of standard positioning target imaging and laser projection imaging.

During detection, the standard positioning target 200 is pre-installed on a workpiece 501 that needs to be positioned. When the standard positioning target 200 installed on the object is illuminated by the lighting system 104, the standard positioning target 200 is imaged on the photoelectric sensor of the detection camera 101 by the first optical imaging lens 103. During use, the adjustable aperture 102 may be adjusted by matching the brightness of the system lighting to ensure that the machine vision imaging system has sufficient brightness and depth of field.

In working, the laser beam from the laser 301, via the laser collimating lens 302, a cylindrical mirror herein, is directed to the standard positioning target 200 and when being projected by the cylindrical mirror on the surface of the standard positioning target, a line of laser light is formed.

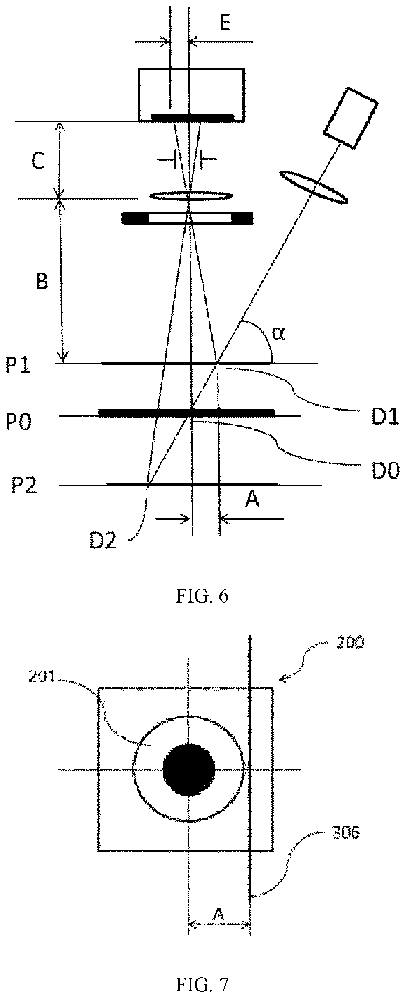

FIG. 6 shows a geometric relation of the laser beam with respect to height. FIG. 7 shows a positional relation of an image of the laser beam with respect to the standard positioning target. When the standard positioning target 200 is at the middle position P0 of the measurement range, the laser light is projected at the center position D0. At this time, the laser light is imaged at the center of the detection camera 101. When the height of the measured object is raised to a position P1, the laser light is projected at a position D1, and a distance from the position D1 to the standard positioning target is A. At this time, the laser light is also imaged on the camera, but the imaging position is deviated from the center of the camera. The image is on the left side with respect to the center of the camera, and a distance from the image to the center of the camera is E. In the same way, when the height of the object being measured is lowered to a position P2, the laser light is projected at a position D2. At this time, the laser light is also imaged on the detection camera 101, but the imaging position is deviated from the center of the camera. The image is on the right side with respect to the center of the camera. In this design, the sensitivity of the measurement and positioning system and a working range of the measurement and positioning is changeable by changing the angle α and the working distance between the laser projection system and the machine vision system 100. An offset of the laser beam from the center is linearly proportional to the height of the object, thus a measurement calibration is required before the instrument is used. Then, the height position of the object can be measured by measuring the distance of the laser beam from the center.

The specific determination of the coordinate positions X and Y and the selection of the standard positioning target 200 are the same as those described in the above embodiment.

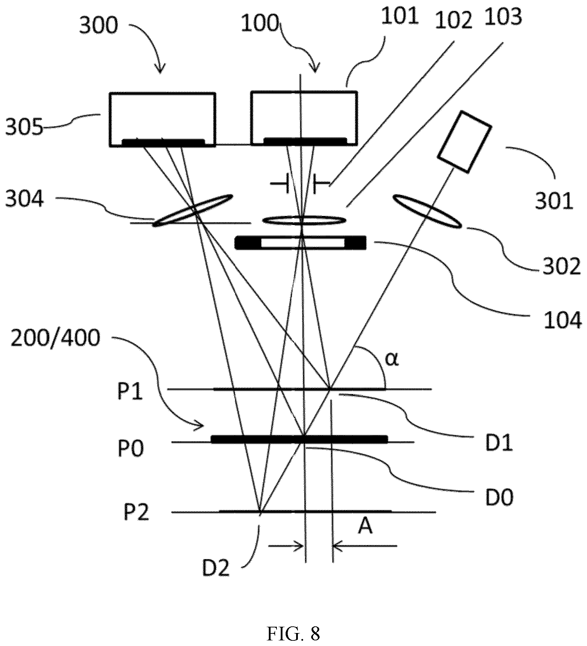

As shown in FIG. 8, two independent optical systems are provided, i.e., a machine vision 100 and a laser triangulation 300. The function of the machine vision system has not changed and is still responsible for illuminating and imaging standard positioning targets.

The machine vision system 100 includes a detection camera 101 and a first optical imaging lens 103 connected to the detection camera 101. The first optical imaging lens 103 is provided with an adjustable aperture 102, and an illumination system 104 is provided at the bottom of the detection camera 101. The machine vision system 100 and the laser ranging system 300 may be integrated and installed on a robot arm.

The laser ranging system 300 includes a laser projection component and a laser imaging component. The laser projection component includes a laser 301 and a laser collimating lens 302 disposed at the front end of the laser 301. The laser imaging component is composed of the second imaging lens 304 and the imaging camera 305;

The laser 301, the laser collimating lens 302, the second imaging lens 304 and the imaging camera 305 are respectively disposed at two sides of the optical axis of the detection camera 101 in the machine vision system 100 in a symmetric manner, it should be noted that other positional installation relationship may also be possible. The imaging camera 305 and the laser 301 are both disposed at an angle to the optical axis directed to the surface of the standard positioning target 200.

The laser beam from the laser 301, after being deflected by 90 degrees by the laser collimator and the reflector, is vertically directed to the surface of the standard positioning target 200, and then the projection of the laser beam is imaged by the laser imaging component.

During detection, the standard positioning target 200 is pre-installed on a workpiece 501 that needs to be positioned. When the standard positioning target 200 installed on the object is illuminated by the lighting system 104, the standard positioning target 200 is imaged on the photoelectric sensor of the detection camera 101 by the first optical imaging lens 103. During use, the adjustable aperture 102 may be adjusted by matching the brightness of the system lighting to ensure that the machine vision imaging system has sufficient brightness and depth of field.

In working, the laser beam from the laser 301 is directed to the standard positioning target 200 via the laser collimating lens 302 or the cylindrical mirror, and when being projected by the cylindrical mirror on the surface of the standard positioning target, a line of laser light or a point is formed, and the projected laser light, via the second imaging lenses 304, is imaged on the imaging camera 305. However, as an angle is formed between the optical axis of the imaging camera 305 and the optical axis of the laser beam, the position of the laser beam on the camera changes in a nonlinear relation. Before use, a test calibration will be performed to obtain the nonlinear relation, so that the calibrated nonlinear function relation can be applied to a height measurement of the standard positioning target 200, that is, the positioning of the vertical coordinate position Z. Similar to a measurement device, the machine vision system 100 is placed in the middle position and configured to measure the plane coordinate positions X and Y of the standard positioning target.

The above-mentioned particular embodiments elaborate the objectives, technical solutions and beneficial effects of the present application in detail. It should be understood that the foregoing are only particular embodiments of the present application and are not intended to limit the present application.

## Claims

1. A measurement and positioning system based on machine vision and laser triangulation, comprising:
a machine vision system (100);
a laser ranging system (300); and
a standard positioning target (200) configured to be installed on a positioned workpiece;
wherein the laser ranging system (300) is configured to project laser light onto the standard positioning target (200); and the machine vision system (100) is configured to capture and image a positioning target and a laser image projected on the standard positioning target (200),
**characterized in that**,
the standard positioning target (200) is a two-dimensional or three-dimensional structure having a center graphic (201), and the standard positioning target (200) is provided with a plurality of solid figures (401) distributed around the center graphic (201); and
the plurality of solid figures (401) are truncated cones and are distributed around the center graphic (201) of the standard positioning target in a circularly symmetrical manner.

2. The measurement and positioning system based on machine vision and laser triangulation as claimed in claim 1, **characterized in that**, the machine vision system (100) comprises a detection camera (101) and a first optical imaging lens (103) connected to the detection camera (101), an adjustable aperture (102) is provided on the first optical imaging lens (103), and an illumination system (104) is further provided at a bottom of the detection camera (101).

3. The measurement and positioning system based on machine vision and laser triangulation as claimed in claim 2, **characterized in that**, the laser ranging system (300) comprises a laser projection component and a laser imaging component, the laser projection component is composed of a laser (301), a laser collimating lens (302) and a beam splitter (303), the laser imaging component is composed of a second imaging lens (304) and an imaging camera (305); the beam splitter (303) is disposed obliquely at 90 degrees below the detection camera (101), the laser (301) is disposed at one side of the beam splitter (303), the laser collimating lens (302) is disposed between the laser (301) and the beam splitter (303); the imaging camera (305) is disposed at one side of the detection camera (101), and the imaging camera (305) is disposed at an angle to an optical axis directed to a surface of the standard positioning target (200); a laser beam from the laser (301), via a laser collimator and a reflector, is deflected by 90 degrees and then vertically directed to the surface of the standard positioning target (200), and scattered light of the laser beam is imaged by the laser imaging component.

4. The measurement and positioning system based on machine vision and laser triangulation as claimed in any of the preceding claims, **characterized in that**, at least three standard positioning targets (200) are provided, and three of the at least three standard positioning targets (200) are configured to be installed on the positioned workpiece at three positions that are not on a straight line.

5. The measurement and positioning system based on machine vision and laser triangulation as claimed in claim 1, **characterized in that**, the laser ranging system (300) comprises a laser (301) and a laser collimating lens (302) disposed at a front end of the laser (301), the laser (301) is disposed at one side of the detection camera (101), and the imaging camera (305) is disposed at an angle to an optical axis directed to the surface of the standard positioning target (200); the laser light emitted by the laser (301), via the laser collimating lens (302), is tilted towards the standard positioning target and is imaged by the machine vision system (100).

6. The measurement and positioning system based on machine vision and laser triangulation as claimed in claim 1, **characterized in that**, the laser ranging system (300) comprises a laser projection component and a laser imaging component, the laser projection component comprises a laser (301) and a laser collimating lens (302) provided at a front end of the laser (301), the laser imaging component is composed of a second imaging lens (304) and an imaging camera (305);
the laser (301), the laser collimating lens (302), the second imaging lens (304) and the imaging camera (305) are respectively disposed at two sides of the optical axis of the detection camera (101) of the machine vision system (100) in a symmetric manner; when laser beam is projected, via the laser (301) and the laser collimating lens (302), on the standard positioning target, the second imaging lens (304) and the imaging camera (305) image the projected laser beam.

## Patentansprüche

1. Mess- und Positionierungssystem, das auf maschinellem Sehen und Lasertriangulation basiert, das Folgendes umfasst:
ein System (100) des maschinellen Sehens;
ein Laserentfernungsmesssystem (300); und
ein Standardpositionierungsziel (200), das konfiguriert ist, an einem positionierten Werkstück installiert zu werden,
wobei das Laserentfernungsmesssystem (300) konfiguriert ist, Laserlicht auf das Standardpositionierungsziel (200) zu projizieren; und das System (100) des maschinellen Sehens konfiguriert ist, ein Positionierungsziel und ein auf das Standardpositionierungsziel (200) projiziertes Laserbild zu erfassen und abzubilden,
**dadurch gekennzeichnet, dass**
das Standardpositionierungsziel (200) eine zweidimensionale oder dreidimensionale Struktur mit einer Mittengraphik (201) ist und für das Standardpositionierungsziel (200) mehrere feste Figuren (401) bereitgestellt sind, die um die Mittengraphik (201) verteilt sind; und
die mehreren festen Figuren (401) Kegelstümpfe sind und um die Mittengraphik (201) des Standardpositionierungsziels (200) kreissymmetrisch verteilt sind.

2. Mess- und Positionierungssystem, das auf maschinellem Sehen und Lasertriangulation basiert, nach Anspruch 1, **dadurch gekennzeichnet, dass** das System (100) des maschinellen Sehens eine Detektionskamera (101) und eine erste optische Bildgebungslinse (103), die mit der Detektionskamera (101) verbunden ist, umfasst, wobei an der ersten optischen Bildgebungslinse (103) eine einstellbare Apertur (102) bereitgestellt ist und ferner an einer Unterseite der Detektionskamera (101) ein Beleuchtungssystem (104) bereitgestellt ist.

3. Mess- und Positionierungssystem, das auf maschinellem Sehen und Lasertriangulation basiert, nach Anspruch 2, **dadurch gekennzeichnet, dass** das Laserentfernungsmesssystem (300) eine Laserprojektionskomponente und eine Laserbildgebungskomponente umfasst, wobei die Laserprojektionskomponente einen Laser (301), eine Laserkollimatorlinse (302) und einen Strahlteiler (303) umfasst, wobei die Laserbildgebungskomponente eine zweite Bildgebungslinse (3304) und eine Bildgebungskamera (305) umfasst; wobei der Strahlteiler (303) schräg bei 90 Grad unterhalb der Detektionskamera (101) angeordnet ist, der Laser (301) auf einer Seite des Strahlteilers (303) angeordnet ist und die Laserkollimatorlinse (302) zwischen dem Laser (301) und dem Strahlteiler (303) angeordnet ist; wobei die Bildgebungskamera (305) auf einer Seite der Detektionskamera (101) angeordnet ist und die Bildgebungskamera (305) in einem Winkel zu einer optischen Achse, die auf eine Oberfläche des Standardpositionierungsziels (200) gerichtet ist, angeordnet ist; wobei ein Laserstrahl von dem Laser (301) über einen Laserkollimator und einen Reflektor um 90 Grad abgelenkt wird und dann vertikal auf die Oberfläche des Standardpositionierungsziels (200) gerichtet wird, wobei das gestreute Licht des Laserstrahls durch die Laserbildgebungskomponente abgebildet wird.

4. Mess- und Positionierungssystem, das auf maschinellem Sehen und Lasertriangulation basiert, nach einem der vorstehenden Ansprüche, **dadurch gekennzeichnet, dass** wenigstens drei Standardpositionierungsziele (200) bereitgestellt sind und drei der wenigstens drei Standardpositionierungsziele (200) konfiguriert sind, auf dem positionierten Werkstück an drei Positionen, die nicht auf einer Geraden liegen, installiert zu werden.

5. Mess- und Positionierungssystem, das auf maschinellem Sehen und Lasertriangulation basiert, nach Anspruch 1, **dadurch gekennzeichnet, dass** das Laserentfernungsmesssystem (300) einen Laser (301) und eine Laserkollimatorlinse (302), die an einem vorderen Ende des Lasers (301) angeordnet ist, umfasst, wobei der Laser (301) auf einer Seite der Detektionskamera (101) angeordnet ist und die Bildgebungskamera (305) in einem Winkel zu einer optischen Achse, die zu der Oberfläche des Standardpositionierungsziels (200) gerichtet ist, angeordnet ist; wobei das durch den Laser (301) emittierte Laserlicht über die Laserkollimatorlinse (302) in Richtung des Standardpositionierungsziels geneigt wird und durch das System (100) des maschinellen Sehens abgebildet wird.

6. Mess- und Positionierungssystem, das auf maschinellem Sehen und Lasertriangulation basiert, nach Anspruch 1, **dadurch gekennzeichnet, dass** das Laserentfernungsmesssystem (300) eine Laserprojektionskomponente und eine Laserbildgebungskomponente umfasst, wobei die Laserprojektionskomponente einen Laser (301) und eine Laserkollimatorlinse (302), die an einem vorderen Ende des Lasers (301) bereitgestellt ist, umfasst, wobei die Laserbildgebungskomponente eine zweite Bildgebungslinse (304) und eine Bildgebungskamera (305) umfasst;
wobei der Laser (301), die Laserkollimatorlinse (302) die zweite Bildgebungslinse (304) und die Bildgebungskamera (305) jeweils auf zwei Seiten der optischen Achse der Detektionskamera (101) des Systems (100) des maschinellen Sehens symmetrisch angeordnet sind; wobei dann, wenn der Laserstrahl durch den Laser (301) und die Laserkollimatorlinse (302) auf das Standardpositionierungsziel projiziert wird, die zweite Bildgebungslinse (304) und die Bildgebungskamera (305) den projizierten Laserstrahl abbilden.

## Revendications

1. Système de mesure et de positionnement basé sur la vision artificielle et la triangulation laser, comprenant :
un système de vision artificielle (100) ;
un système de télémétrie laser (300) ; et
une cible de positionnement normalisée (200) conçue pour être installée sur une pièce de fabrication positionnée ;
le système de télémétrie laser (300) étant conçu pour projeter de la lumière laser sur la cible de positionnement normalisée (200) ; et le système de vision artificielle (100) étant conçu pour capturer et imager une cible de positionnement et une image laser projetée sur la cible de positionnement normalisée (200),
**caractérisé en ce que**
la cible de positionnement normalisée (200) est une structure bidimensionnelle ou tridimensionnelle comportant un schéma central (201), et la cible de positionnement normalisée (200) est pourvue d'une pluralité de formes pleines (401) réparties autour du schéma central (201) ; et
la pluralité de formes pleines (401) sont des cônes tronqués et sont réparties autour du schéma central (201) de la cible de positionnement normalisée avec une symétrie circulaire.

2. Système de mesure et de positionnement basé sur la vision artificielle et la triangulation laser selon la revendication 1, **caractérisé en ce que** le système de vision artificielle (100) comprend une caméra de détection (101) et une première lentille d'imagerie optique (103) reliée à la caméra de détection (101), une ouverture réglable (102) est disposée sur la première lentille d'imagerie optique (103), et un système d'éclairage (104) est en outre disposé en bas de la caméra de détection (101).

3. Système de mesure et de positionnement basé sur la vision artificielle et la triangulation laser selon la revendication 2, **caractérisé en ce que** le système de télémétrie laser (300) comprend un composant de projection laser et un composant d'imagerie laser, le composant de projection laser est composé d'un laser (301), d'une lentille de collimation laser (302) et d'un séparateur de faisceau (303), le composant d'imagerie laser est composé d'une deuxième lentille d'imagerie (304) et d'une caméra d'imagerie (305) ; le séparateur de faisceau (303) est disposé obliquement à 90 degrés sous la caméra de détection (101), le laser (301) est disposé sur un côté du séparateur de faisceau (303), la lentille de collimation laser (302) est disposée entre le laser (301) et le séparateur de faisceau (303) ; la caméra d'imagerie (305) est disposée sur un côté de la caméra de détection (101), et la caméra d'imagerie (305) est disposée à un angle par rapport à un axe optique dirigé vers une surface de la cible de positionnement normalisée (200) ; un faisceau laser provenant du laser (301), par le biais d'un collimateur laser et d'un réflecteur, est dévié de 90 degrés et dirigé ensuite verticalement vers la surface de la cible de positionnement normalisée (200), et la lumière diffusée du faisceau laser est imagée par le composant d'imagerie laser.

4. Système de mesure et de positionnement basé sur la vision artificielle et la triangulation laser selon l'une quelconque des revendications précédentes, **caractérisé en ce qu'**au moins trois cibles de positionnement normalisées (200) sont prévues, et trois des au moins trois cibles de positionnement normalisées (200) sont conçues pour être installées sur la pièce de fabrication positionnée à trois positions qui ne sont pas sur une ligne droite.

5. Système de mesure et de positionnement basé sur la vision artificielle et la triangulation laser selon la revendication 1, **caractérisé en ce que** le système de télémétrie laser (300) comprend un laser (301) et une lentille de collimation laser (302) disposée à une extrémité avant du laser (301), le laser (301) est disposé sur un côté de la caméra de détection (101), et la caméra d'imagerie (305) est disposée à un angle par rapport à un axe optique dirigé vers la surface de la cible de positionnement normalisée (200) ; la lumière laser émise par le laser (301), par le biais de la lentille de collimation laser (302), est inclinée vers la cible de positionnement normalisée et est imagée par le système de vision artificielle (100).

6. Système de mesure et de positionnement basé sur la vision artificielle et la triangulation laser selon la revendication 1, **caractérisé en ce que** le système de télémétrie laser (300) comprend un composant de projection laser et un composant d'imagerie laser, le composant de projection laser comprend un laser (301) et une lentille de collimation laser (302) disposée à une extrémité avant du laser (301), le composant d'imagerie laser est composé d'une deuxième lentille d'imagerie (304) et d'une caméra d'imagerie (305) ;
le laser (301), la lentille de collimation laser (302), la deuxième lentille d'imagerie (304) et la caméra d'imagerie (305) sont respectivement disposés sur deux côtés de l'axe optique de la caméra de détection (101) du système de vision artificielle (100) de manière symétrique ; quand un faisceau laser est projeté, par le biais du laser (301) et de la lentille de collimation laser (302), sur la cible de positionnement normalisée, la deuxième lentille d'imagerie (304) et la caméra d'imagerie (305) imagent le faisceau laser projeté.
